# FASCICULE DE BREVET EUROPEEN

(11) **EP 1 362 664 B1**
(45) Date de publication et mention de la délivrance du brevet: **21.12.2005**
(21) Numéro de dépôt: 03291150.5
(22) Date de dépôt: 16.05.2003
(51) Int. Cl.: B23Q 1/01, B23Q 5/28, B23Q 1/58

(54) **Fraiseuse a haute vitesse**
Hochgeschwindigheitfräsmaschine
High speed milling machine

(30) Priorité: 16.05.2002 ES 200201103
(43) Date de publication de la demande: 19.11.2003
(73) Titulaire: Soraluce, S. Coop, 20570 Bergara (Guipuzcoa) (ES)
(72) Inventeur: Mendia Olabarria, Angel Ma, Eibar (Guipuzcoa) (ES)
(74) Mandataire: Intes, Didier Gérard André

(56) Documents cités:
- WO-A-01/07204
- WO-A-02/28592

## Description

Parmi les fraiseuses à colonne mobile, on connaît déjà des solutions que l'on appelle à haute vitesse, en raison de la vitesse et des accélérations des déplacements de la colonne mobile selon l'axe horizontal « X ».

Parmi les solutions connues, il existe des réalisations qui atteignent des accélérations comprises entre 5 et 10 m/s², à l'aide d'actionnements qui peuvent être du type classique, c'est-à-dire qui comprennent un servomoteur et une transmission du mouvement par un ensemble à pignon-crémaillère ou à vis-écrou.

On connaît aussi des solutions comportant un actionnement agissant à l'aide de moteurs linéaires.

Dans les deux cas, la colonne mobile présente un guide supérieur qui lui confère la stabilité et la fiabilité adéquates dans ses déplacements.

L'objet de la présente invention est une fraiseuse selon le préambule de la revendication 1. Un exemple de cette fraiseuse est décrit dans WO 02/28592 A.

La machine objet de l'invention, est décrite par les caractéristiques de la revendication 1.

Le troisième guide diminue l'effet de torsion qui prend naissance dans la base de la colonne avec la saillie du coulisseau. Ces trois guides linéaires sont suffisants et on n'a pas besoin de guidage supérieur de la colonne.

Selon une autre caractéristique nouvelle de la présente invention, la colonne mobile est composée de deux moitiés indépendantes l'une de l'autre, entre lesquelles est disposée la console du coulisseau qui joue le rôle d'assemblage entre les deux moitiés.

Chacune des deux moitiés de la colonne présente un dessin particulier, qui comprend une face verticale et des faces latérales, ainsi qu'une partie arrière, définies par une surface qui s'ouvre en inclinaison vers l'extérieur, en définissant une large base, de grande surface comparativement à la partie supérieure de chaque moitié de la colonne, selon une configuration en flèche.

La large base des deux moitiés de la colonne permet d'incorporer un grand nombre de patins pour les trois guides linéaires du banc de la colonne. En outre, cette réalisation de la colonne permet d'adopter une réalisation particulière des moteurs linéaires qui assurent le déplacement de la colonne selon l'axe horizontal « X ».

En effet; pour le déplacement de la colonne selon l'axe « X », on utilise au moins deux moteurs linéaires et, de préférence quatre moteurs linéaires, dont le primaire ou enroulement est monté dans la zone inférieure de la colonne, plus concrètement, deux primaires dans la base de chaque moitié de la colonne, les quatre primaires étant alignés entre eux.

Les secondaires, ou aimants fixes, sont montés dans la base du banc, eux aussi alignés entre eux, de sorte qu'ils forment pratiquement un unique secondaire commun pour les quatre primaires de la base de la colonne.

D'un autre côté, la réalisation de la colonne en deux moitiés indépendantes qui sont réunies par la console du coulisseau, jouant le rôle de noeud d'assemblage entre elles, permet une autre particularité de la présente invention, qui est la possibilité de séparer facultativement une des moitiés de l'autre.

De cette façon, on peut laisser la console et le coulisseau, accrochés à l'une des deux moitiés et les séparer entièrement de l'autre, pour procéder aux opérations de montage et de maintenance appropriées.

Le coulisseau est entraîné, selon l'axe vertical "Y", par l'actionnement de moteurs linéaires et, grâce à cette structure de la colonne en deux moitiés qui forment entre elles un espace entièrement ouvert, le coulisseau peut occuper une position basse dans laquelle la hauteur du coulisseau au-dessus du sol est au maximum de 900 mm, cote qu'on ne pouvait pas atteindre jusqu'à ce jour avec les solutions connues dans lesquelles on recourrait même au creusement d'une fosse sur le lieu d'installation de la machine pour réduire la distance du coulisseau au sol mais, dans ce cas, on perd de la rigidité de la machine, puisque le coulisseau travaille dans une position incorrecte pour atteindre cette cote, c'est-à-dire que, du coulisseau jusqu'au plan inférieur de la machine, il y a plus de 900 mm.

Le mouvement du coulisseau selon l'axe vertical "Y" est obtenu avec au moins deux moteurs linéaires placés dans les deux côtés de la colonne, un dans chaque côté.

Le guidage selon l'axe "Y" est confié à deux paires de guides linéaires, l'une située dans la partie arrière de la colonne et l'autre dans la zone avant. Les patins à rouleaux pour ces guides sont fixés à la console du coulisseau.

D'un autre côté, la structure séparée des deux moitiés qui constituent la colonne, avec le fait que la machine n'a pas besoin d'un guidage supérieur de la colonne, permet d'obtenir une machine qui, une fois montée, n'excède pas les 3,6 m, compte tenu du fait que la plate-forme d'un camion est de 0,9 m, on obtient une hauteur totale de 4,5 m. Ce fait permet le transport de la machine par route sur un camion, avec la machine pratiquement entièrement montée.

Le mouvement du coulisseau selon l'axe "Z" est aussi obtenu au moyen d'au moins un moteur linéaire; de sorte que la machine présente une caractéristique de haute vitesse dans les trois axes "X", "Y" et "Z", sur lesquels l'actionnement s'effectue au moyen de moteurs linéaires.

Le moteur linéaire pour le mouvement du coulisseau selon l'axe "Z" est monté dans la zone supérieure du coulisseau. Le primaire ou enroulement est monté dans la zone amère du coulisseau, tandis que le secondaire ou les aimants fixes sont montés dans la console. La longueur du secondaire tient compte de toute la possibilité de déplacement du coulisseau, de sorte que le coulisseau proprement dit, dans la zone avant de la machine, recouvre et protège toujours le secondaire, depuis la position la plus reculée du coulisseau jusqu'à la plus avancée.

De cette façon, sans qu'il soit nécessaire de prévoir des protections du type soufflet ou analogue, le secondaire reste toujours protégé par le coulisseau lui-même dans la partie avant de la machine, qui est l'endroit où des copeaux et résidus de l'usinage peuvent jaillir pendant la phase de travail.

Le guidage du coulisseau constitue aussi une autre caractéristique de cette invention. En effet, on connaît déjà une solution qui utilise deux guides linéaires fixés au coulisseau et des patins fixés à la console, dans sa zone avant. Une autre solution déjà connue utilise des guides linéaires fixés à la console et des patins réunis au coulisseau dans sa zone arrière.

Le guidage du coulisseau est exécuté avec une solution qui est pratiquement un hybride des deux réalisations connues, qui utilise quatre guides linéaires, deux dans la zone supérieure du coulisseau et deux autres dans la partie inférieure. Les deux guides de la partie supérieure sont fixés à la console et trois patins à rouleaux sont fixés au coulisseau sur chaque côté. Les deux guides de la partie inférieure sont fixés au coulisseau lui-même avec un patin pour chacun des guides, fixé à la console. De cette façon, dans la zone supérieure, ce sont les patins qui se déplacent et, dans la zone inférieure, ce sont les guides qui se déplacent. Les blocages sont réalisés au moyen de patins du type frein, montés dans les guides eux-mêmes.

Avec cette solution, lorsque le coulisseau se trouve dans la zone arrière, on obtient une amélioration de la rigidité comparativement aux solutions classiques.

La compensation du poids du coulisseau s'effectue au moyen de cylindres télescopiques qui permettent d'obtenir une notable économie d'espace en hauteur.

Il est à remarquer que les moteurs linéaires du déplacement vertical selon "Y", et les quatre guides linaires pour les déplacements verticaux selon "Y" et les cylindres télescopiques de compensation du poids sont disposés symétriquement, de sorte que les diagonales théoriques de jonction des quatre guides linaires se coupent en un point qui coïncide avec l'intersection des lignes théoriques de jonction des cylindres télescopiques et celles de jonction des moteurs linéaires.

Ce point d'intersection commun coïncide à son tour avec le centre de gravité de l'ensemble "Y"-"Z", ce qui permet d'obtenir un bon équilibrage et de bonnes prestations de la machine.

La figure 1 montre une vue en perspective de la fraiseuse objet de la présente invention.

La figure 2 est la vue en élévation frontale de la fraiseuse.

La figure 3 est une vue en perspective qui montre la configuration d'une des moitiés (1.1 ou 1.2) qui composent la colonne (1).

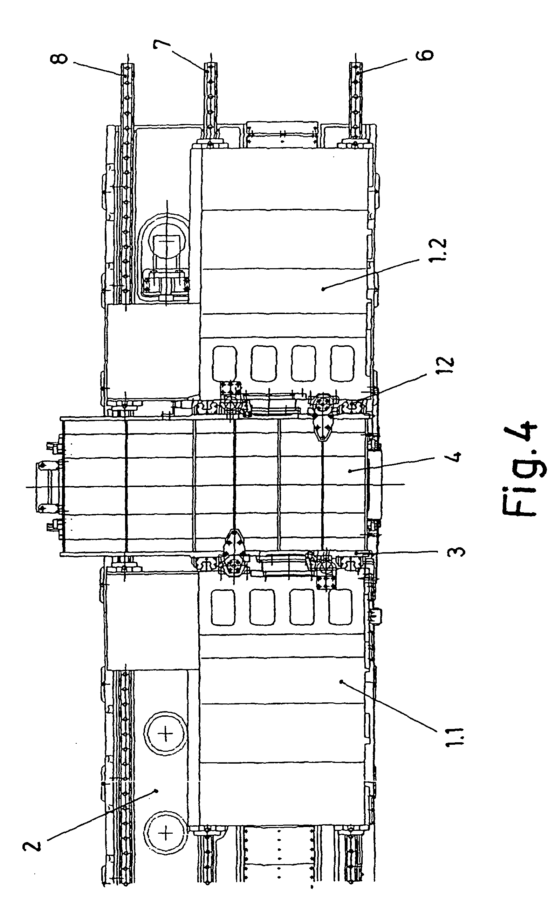

La figure 4 est une vue en plan de dessus de la fraiseuse, prise en regardant la partie centrale de celle-ci.

La figure 5 est une vue prise du côté gauche de la fraiseuse, qui montre la partie du banc (2) et le guidage selon "X".

La figure 6 est une vue en plan de dessous des deux moitiés (1.1) et (1.2) qui composent la colonne (1).

La figure 7 montre, dans une vue prise de la partie supérieure de la fraiseuse, la partie de sa console centrale (3) et les guides (12) prévus pour le guidage selon "Y".

La figure 8 est une vue telle que celle de la figure 2, mais avec la moitié (1.1) séparée.

La figure 9 est une vue prise de la partie arrière du coulisseau (4) pour pouvoir remarquer son guidage selon "Z".

Les figures 10 et 11 sont des vues respectives prises de l'un des côtés de l'ensemble formé par le coulisseau (4) et la console (3) pour pouvoir comprendre le mouvement du coulisseau (4) par rapport aux guides (14 et 15) selon l'axe "Z".

La figure 12 est une vue de côté telle que celle des figures 10 et 11 mais qui reprend en détail la partie des patins (14.1 et 15.1) des guides (14 et 15).

La figure 13 est une vue telle que celle de la figure 7, mais qui indique le point d'intersection "P" qui coïncide avec le centre de gravité de l'ensemble "Y", "Z" de la machinerie.

L'objet de la présente invention est une fraiseuse à grande vitesse du type de celles qui comprennent une colonne ou un montant mobile qui est monté sur un banc fixe.

La colonne mobile peut se déplacer le long du banc selon un axe horizontal "X" ; tandis que, dans ladite colonne, est monté le coulisseau, connu aussi sous le nom de bélier, qui comporte la tête porte-outil à une extrémité. Le coulisseau proprement dit est disposé dans une console, en formant un ensemble qui peut se déplacer verticalement le long de la colonne en suivant un axe vertical appelé "Y".

Le coulisseau peut aussi se déplacer horizontalement, en se projetant en saillie, dans une mesure plus ou moins grande par rapport à la colonne, selon un axe horizontal perpendiculaire à l'axe "X" précité et qui est appelé axe "Z".

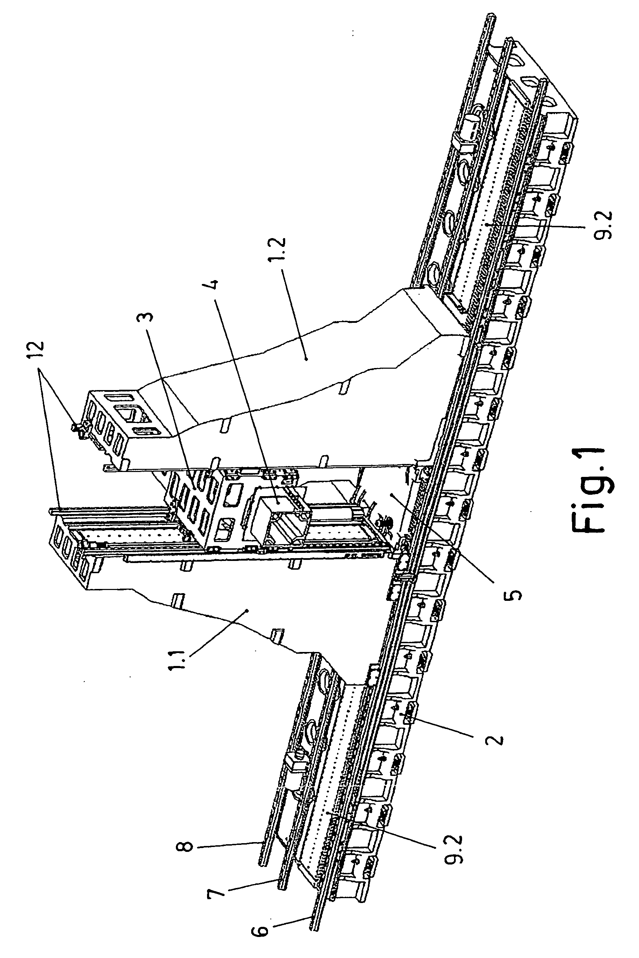

Selon la présente invention, la colonne (1) est composée de deux moitiés égales et indépendantes (1.1 et 1.2) et elle est disposée sur un banc fixe (2), voir figure 1.

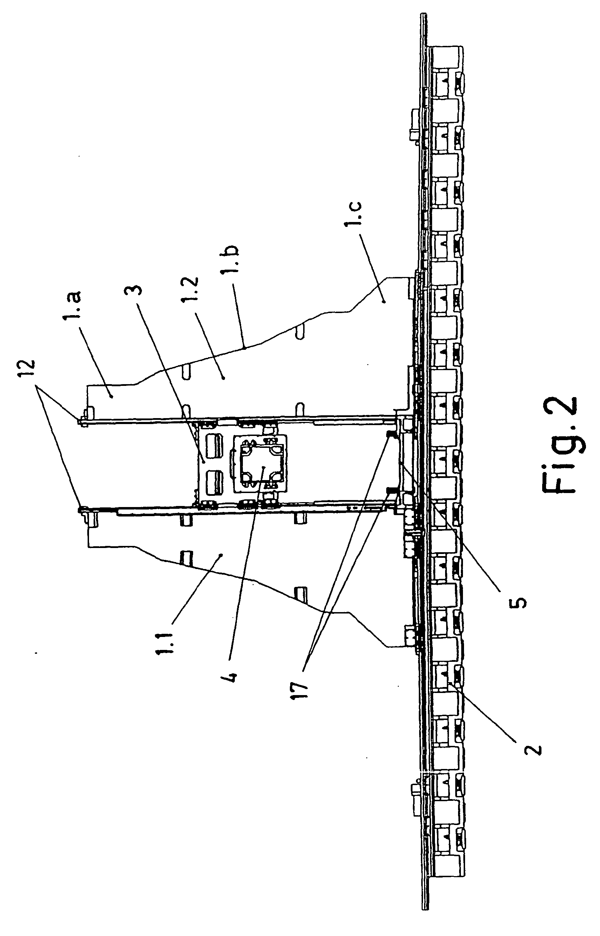

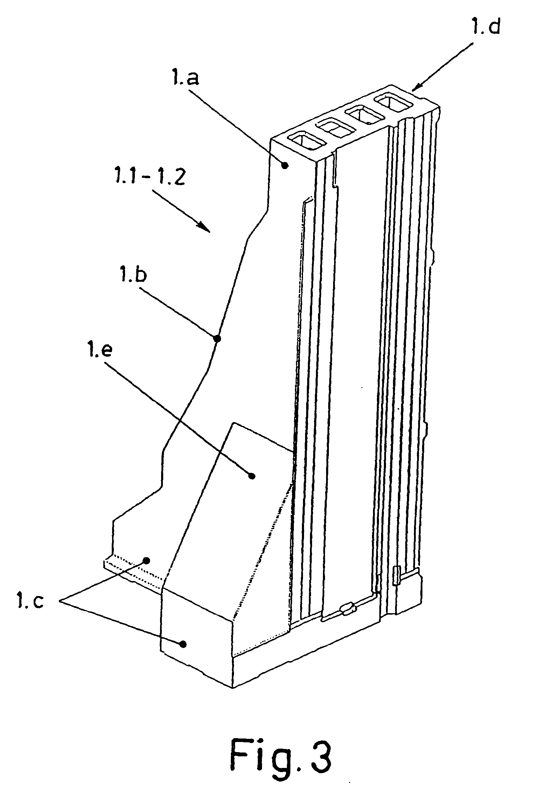

Chaque moitié (1.1-1.2) présente une configuration déterminée par une partie supérieure (1.a) et une base (1.c) sensiblement plus grande que la partie supérieure, dans une configuration en flèche, définie par une partie frontale verticale (1.d) et une partie arrière (1.e) qui s'élargit vers l'arrière, ainsi que des côtés (1.b) qui s'étendent en s'ouvrant, à partir de la partie supérieure (1.a) jusqu'à atteindre la plus grande dimension de la base (1.c), voir figures 2 et 3.

Avec cette configuration, la colonne (1) présente une grande base, capable de renfermer les moyens d'actionnement et de guidage de la colonne (1) selon l'axe "X".

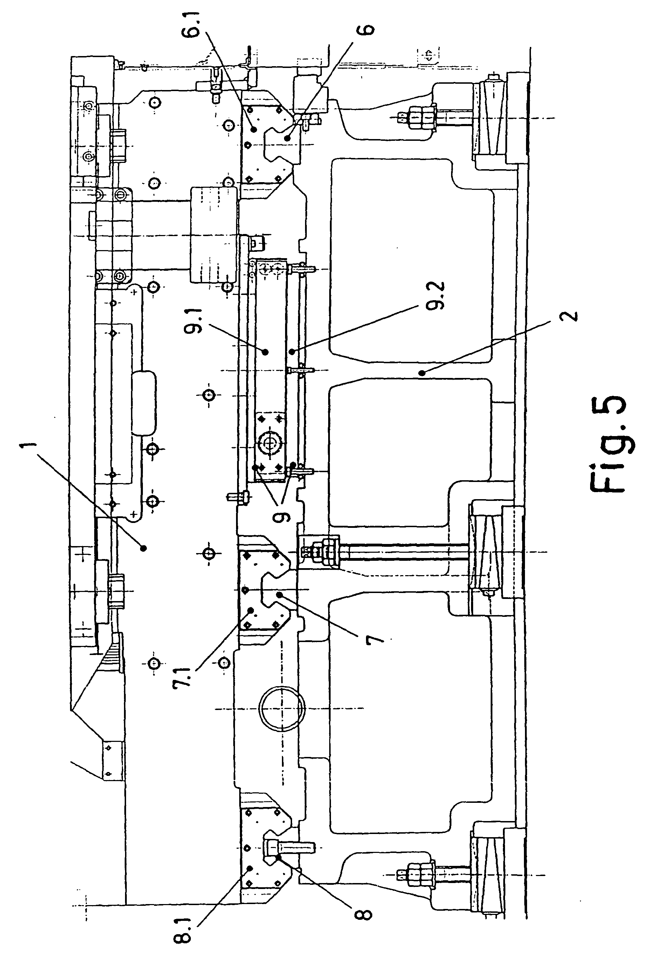

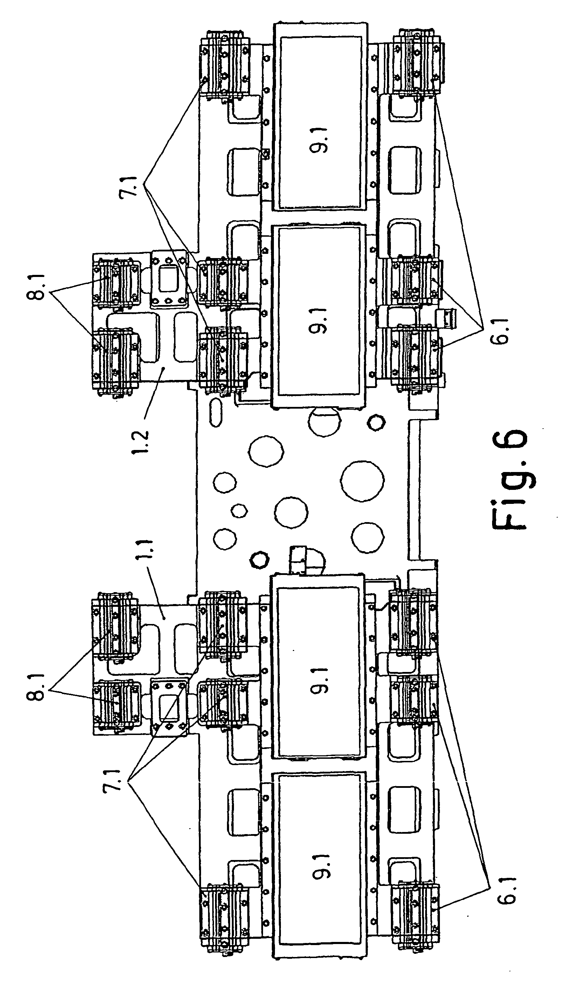

Les moyens de guidage se composent de trois guides latéraux (6, 7 et 8) fixés au banc (2), voir figure 1, et de patins à rouleaux (6.1, 7.1 et 8.1) fixés à la base de la colonne (1). Au total, il y a seize patins à rouleaux dont six patins (6.1) correspondent au premier guide (6); six autres patins (7.1) correspondent au deuxième guide (7) et quatre patins (8.1) correspondent au troisième guide (8), voir figures 5 et 6.

Parmi ces seize patins à rouleaux, huit sont disposés dans la base de la moitié (1.1) et les huit autres dans la base de la moitié (1.2) de la colonne (1) selon une distribution trois, trois, deux.

Les premier et deuxième guides (6 et 7) du banc (2) définissent, avec les guides (12) de l'axe vertical "Y", autant de plans longitudinaux parallèles. C'est-à-dire que le guide (6) et les deux guides (12) avant occupent un plan longitudinal qui est parallèle à un autre plan longitudinal dans lequel se trouvent le guide (7) et les deux guides (12) arrière. Cette disposition améliore la rigidité de la machine. Le troisième guide (8) diminue l'effet de torsion qui prend naissance dans la base de la colonne (1) par suite de la saillie du coulisseau (4).

Pour l'actionnement de la colonne (1) selon l'axe horizontal "X", on utilise au moins deux moteurs linéaires synchrones (9), montés le long d'une ligne, et de préférence quatre moteurs linéaires synchrones (9). Le secondaire, désigné par la référence (9.2) qui est celui qui comporte des aimants fixes, est monté sur le banc (2), de sorte que les quatre secondaires (9.2) sont disposés l'un derrière l'autre en alignement, comme s'ils formaient un secondaire .unique, voir figures 1 et 5.

Les quatre primaires ou enroulements (9.1) sont eux aussi alignés, deux d'entre eux étant montés dans la base de la moitié (1.1) de la colonne (1) et les deux autres dans la moitié (1.2), voir figure 6.

Le coulisseau (4) avec sa console (3) est disposé entre les deux moitiés indépendantes (1.1 et 1.2) qui forment la colonne (1), et il a été prévu de disposer un pont inférieur raidisseur (5) et la possibilité de disposer d'une structure de pont de jonction entre les moitiés (1.1 et 1.2) à la partie supérieure (1.a) de ces dernières. Dans le cas où cette structure supérieure de jonction existe, elle serait de nature à pouvoir être retirée et/ou rabattue pour le transport de la machine, de sorte que, sans cette structure supérieure, il a été prévu que la machine atteigne une hauteur non supérieure à 3600 mm, ce qui autorise son transport par la route.

Du fait que les moitiés (1.1 et 1.2) sont indépendantes, il se forme une zone centrale entièrement ouverte entre elles, ce qui permet que le coulisseau, dans sa disposition la plus inférieure, occupe une position très basse, dans laquelle on atteint une cote non supérieure à 900 mm d'écartement entre l'axe longitudinal du coulisseau et le sol. En ce sens, et au stade du prototype, on a atteint une cote de 800 mm d'écartement entre l'axe du coulisseau et le sol, avec des résultats très satisfaisants, en prévoyant de réduire cette cote.

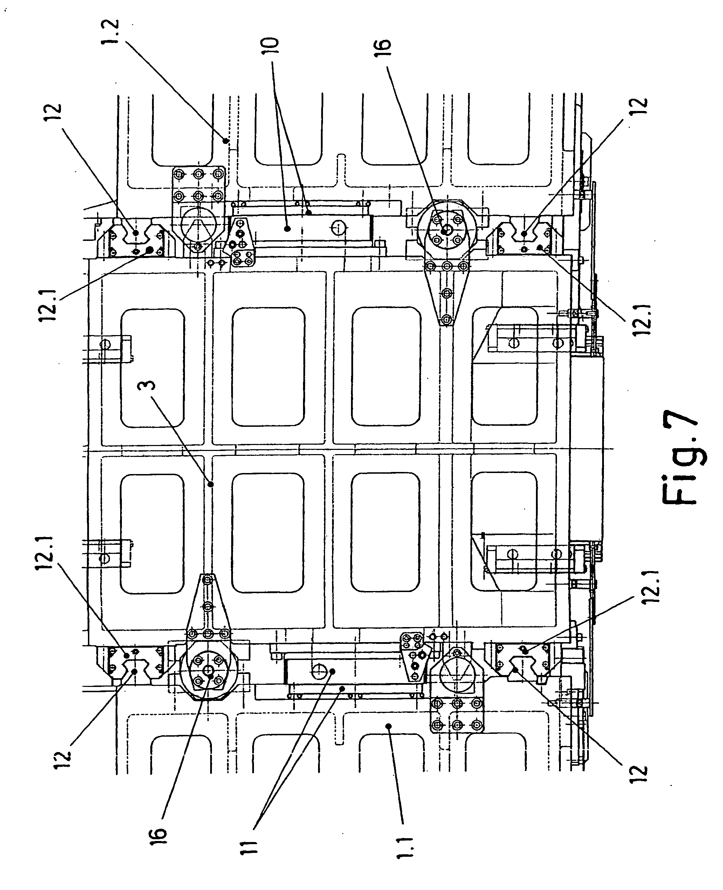

Pour le déplacement du coulisseau (4) selon l'axe "Y", on dispose de deux moteurs linéaires (10 et 11) placés au droit des côtés opposés face-à-face des moitiés (1.1 et 1.2) de la colonne (1). Les primaires des moteurs linéaires (10 et 11) sont fixés à la console (3) du coulisseau (4) et les secondaires à la colonne (1), voir figures 3 et 7.

Pour le guidage du coulisseau (4) selon l'axe "Y", on dispose de quatre guides linéaires (12) fixés à la colonne (1), dont deux à la partie avant de la colonne (1) et les deux autres à la partie arrière. Les patins à rouleaux (12.1) de ces guides (12) sont fixés à la console (3), de préférence au nombre de trois pour chaque guide (12), voir figures (1, 7 et 8).

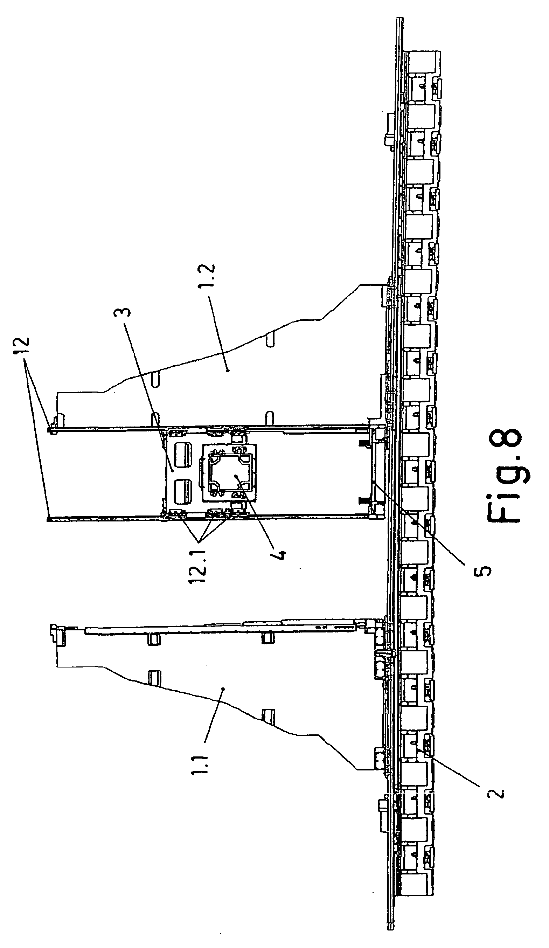

Avec cette disposition, et grâce au fait que la colonne (1) est composée de deux moitiés (1.1 et 1.2) indépendantes, on peut procéder à séparer une des deux moitiés (1.1 ou 1.2) de l'autre, comme on le représente sur la figure 8, pour permettre les opérations de montage, de maintenance ou de réparation des guides linéaires de l'axe "Y", des moteurs linéaires de l'axe "Y" (aussi bien le primaire que le secondaire) et des primaires des moteurs centraux de l'axe "X" (on accède aux moteurs non centraux à partir des extrémités de la base de la colonne).

Par exemple, s'il était nécessaire de réparer le moteur linéaire (10), on pourrait desserrer les vis de fixation des deux guides (12) de la zone supérieure et moyenne de ce côté, une fois le coulisseau (4) disposé dans la partie inférieure, et desserrer les vis de la partie inférieure de ces guides (12) une fois le coulisseau (4) remonté.

De même, en desserrant les vis de fixation du pont inférieur (5) à ce côté, on pourrait, sans autre problème, retirer la moitié (1.2) de la colonne (1), en laissant le coulisseau (4) et sa console (3) suspendus à l'autre moitié (1.1).

De cette façon, on pourrait accéder au moteur linéaire (10) et le réparer.

De même, et grâce à cette disposition, on facilite le montage des quatre primaires (9.1) des moteurs (9) et, en définitive, on améliore le montage et la maintenance de la machine.

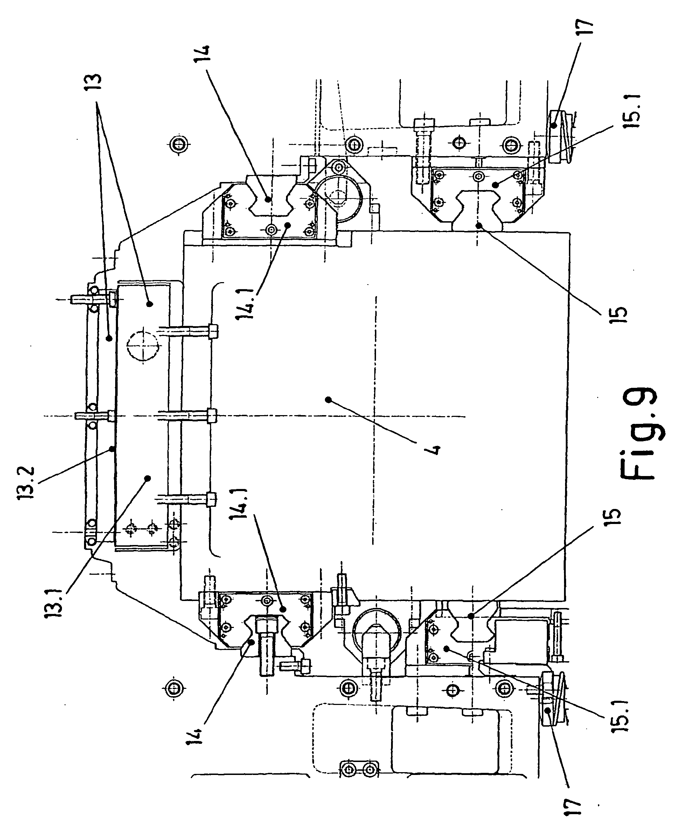

Pour l'actionnement du coulisseau selon l'axe "Z", il existe un moteur linéaire (13) monté au niveau de la partie supérieure du coulisseau (4). Le primaire (13.1) est monté dans la partie arrière du coulisseau (4) et le secondaire (13.2) dans la console (3), voir figure 9.

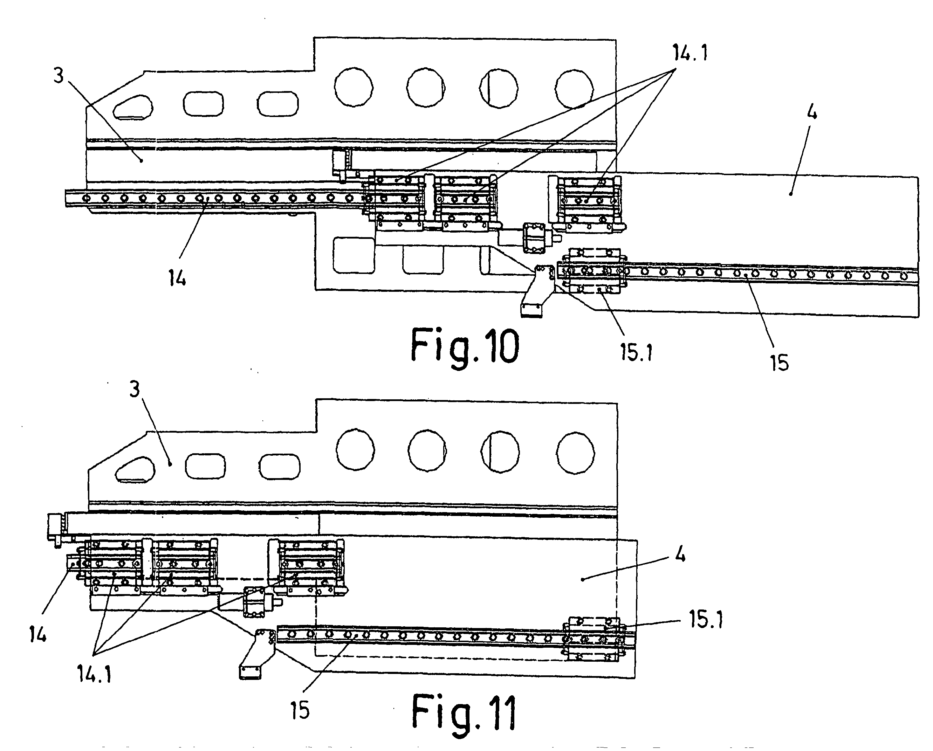

Le secondaire (13.2) s'étend sur tout le parcours du coulisseau (4), de sorte que, lorsque le coulisseau (4) occupe la position la plus reculée, il (le coulisseau) recouvre tout le secondaire dans la zone avant de la colonne (1) et qu'il le recouvre de même lorsqu'il part vers l'avant, voir figures 10 et 11.

Avec cette disposition, le secondaire (13.2) est toujours protégé par le coulisseau (4) lui-même des éventuels copeaux et résidus de l'usinage qui jaillissent dans la zone avant de la colonne (1) pendant le processus de travail.

De même le primaire (13.1) n'abandonne jamais la zone comprise entre les deux moitiés (1.1 et 1.2) de la colonne (1), et, ainsi, il est lui aussi protégé pendant la phase de travail.

Le guidage selon l'axe "Z" s'effectue au moyen de quatre guides linéaires dont deux sont situés au niveau de la zone supérieure du coulisseau (4) et désignés par la référence numérique (14) et les deux autres placés dans la zone inférieure et désignés par référence numérique (15), voir figure 9.

Les guides linéaires supérieurs (14) sont fixés à la console (3), tandis que les guides inférieurs (15) sont fixés au coulisseau (4).

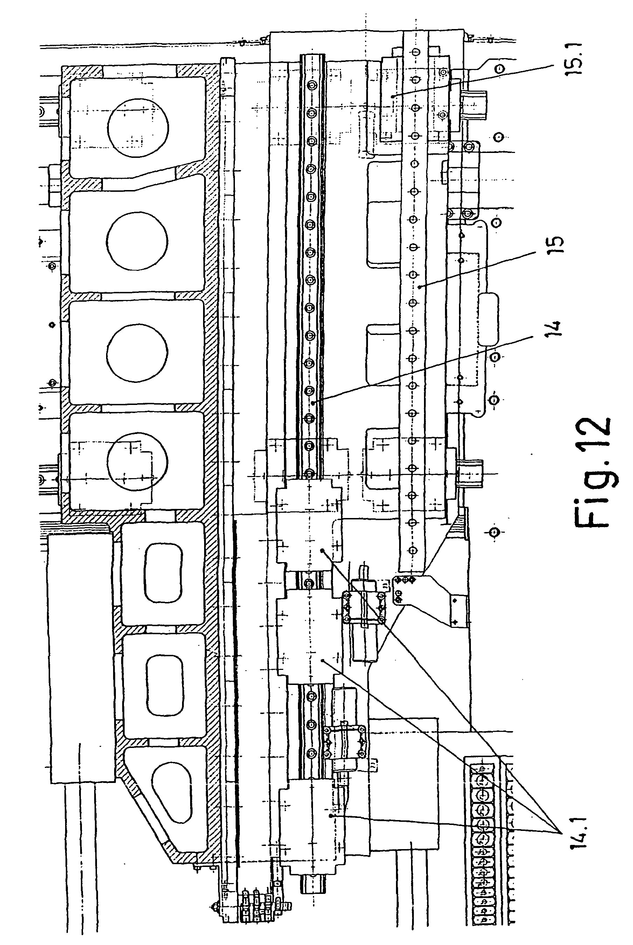

Pour chacun des deux guides supérieurs (14), il y a trois patins à rouleaux (14.1) fixés au coulisseau (4), tandis que, pour chacun des deux guides inférieurs (15), il y a un patin à rouleaux (15.1) fixé à la console (3), de sorte que, dans la partie supérieure, ce sont les patins (14.1) qui se déplacent et que, dans la partie inférieure, ce sont les guides (15) qui se déplacent, voir figure 12.

Avec cette disposition, lorsque le coulisseau (4) se trouve dans la zone arrière, la rigidité est améliorée par rapport aux autres solutions de guidage déjà existantes.

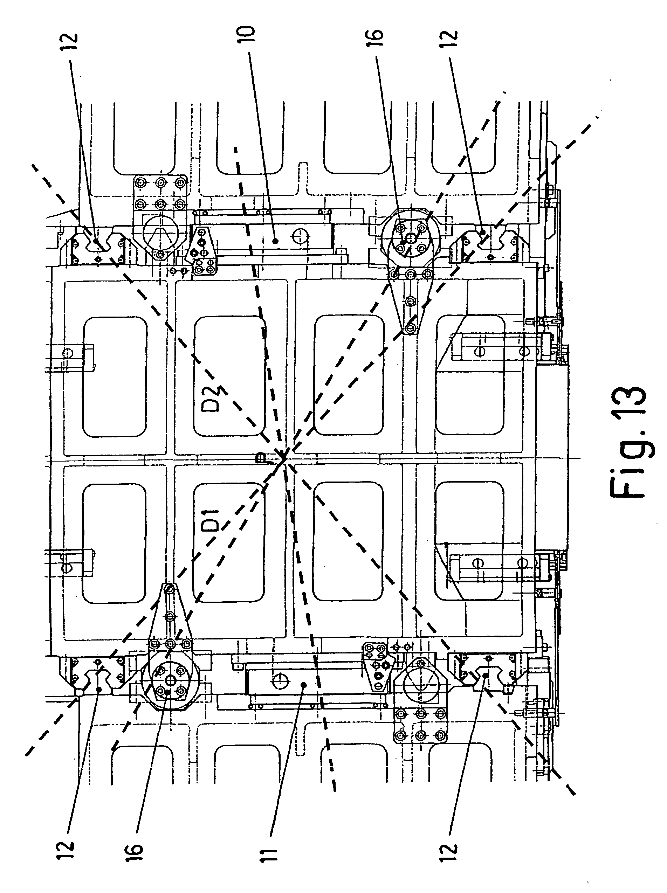

Le poids du coulisseau est compensé au moyen de cylindres hydrauliques télescopiques (16) montés dans la partie inférieure de la colonne (1), avec lesquels on atteint une économie considérable d'espace en hauteur. Ces cylindres hydrauliques (16) et les accumulateurs hydrauliques correspondants travaillent à la poussée, voir figure 13.

A la partie inférieure de la colonne (1), et plus concrètement sur le pont inférieur (5), sont montés les amortisseurs correspondants (17), voir figures 2 et 9. D'un autre côté, le blocage des guides (14 et 15) s'effectue au moyen de patins du type frein montés sur leurs propres guides. Il a été prévu de disposer des appuis, de préférence au nombre de trois, le long de l'axe "Z".

Comme on peut le voir sur la figure 13, les diagonales D1 et D2 qui joignent les guides linéaires (12) des mouvements selon l'axe vertical "Y" se coupent en un point "P" où coïncide de même l'intersection des lignes théoriques de jonction des moteurs linéaires (10) et (11) et des cylindres télescopiques (16) de compensation du poids. Ce point d'intersection "P" coïncide avec le centre de gravité de l'ensemble "Y"-"Z", de sorte qu'on obtient un bon équilibrage et de bonnes prestations de la machine.

Comme compléments de la machine, il a été prévu de disposer de protections telles que des stores enroulables sur l'axe "Y" et des soufflets sur l'axe "X", ainsi que les raclettes correspondantes selon l'axe "Z".

## Revendications

1. Fraiseuse à grande vitesse du type de celles dont la colonne (1) est mobile le long d'un banc (2) selon un axe horizontal X , la colonne (1) étant constituée de deux moitiés (1.1 1.2) qui, à partir de leur partie supérieure, s'élargissent vers la base, en formant une large base dans laquelle chaque moitié (1.1, 1.2) comprend les primaires (9.1) de moteurs linéaires synchrones (9) dont les secondaires (9.2) sont alignés longitudinalement sur le banc (2) **caractérisée en ce que** ce banc (2) comprend trois guides linéaires (6, 7, 8) qui, avec des patins (6.1, 7.1, 8.1) disposés dans la base des moitiés (1.1 et 1.2) de la colonne (1) rendent possible, lors de l'actionnement des moteurs linéaires (9), le déplacement de la colonne (1) à grande vitesse selon l'axe X sans exiger de guide supérieur de cette colonne.

2. Fraiseuse à grande vitesse selon la revendication précédente, **caractérisée en ce que** les deux moitiés (1.1, 1.2) de la colonne (1) sont réunies entre elles au moyen d'au moins un pont raidisseur (5) disposé de préférence dans la partie inférieure, de telle sorte qu'une quelconque des deux moitiés (1.1, 1.2) peut être détachée du pont (5) et retirée, en laissant le coulisseau (4) et sa console (3) suspendus à l'autre moitié (1.1, 1.2) pour procéder aux opérations de montage et de maintenance.

3. Fraiseuse à grande vitesse selon la revendication 1, **caractérisée** l'axe en ce **que**, parmi les trois guides généraux (6, 7, 8) des déplacements selon l'axe X, les deux premiers forment, avec des guides linéaires (12) pour le mouvement du coulisseau (4) selon un axe vertical Y, des plans longitudinaux et parallèles dont un comprend le guide (6) et les guides (12) avant, et l'autre le guide (7) et les guides (12) arrière (12), ce qui améliore la rigidité de la fraiseuse, tandis que le troisième guide (8) diminue les effets de torsion.

4. Fraiseuse à grande vitesse selon les revendications 1 et 2, **caractérisée en ce que**, entre les deux moitiés (1.1, 1.2) de la colonne (1) est défini un espace entièrement ouvert jusqu'au point où l'on atteint le pont raidisseur inférieur (5), de sorte que, selon l'axe "Y", le coulisseau (4) peut atteindre une position basse dans laquelle la cote de hauteur de l'axe du coulisseau (4) par rapport au sol est réduite, cette cote étant de 900 mm au maximum.

5. Fraiseuse à grande vitesse selon la revendication 1, **caractérisée en ce que**, pour l'actionnement du coulisseau (4) selon un axe Z horizontal et perpendiculaire à l'axe X, il existe un moteur linéaire (13) dont le secondaire (13.2) s'étend sur tout le parcours du coulisseau (4), lequel, ainsi, le recouvre et le protège pendant la phase de travail ; ce mouvement selon l'axe "Z" du coulisseau (4) est guidé par une paire de guides linéaires (14 et 15) situés dans chaque côté de ce dernier ; parmi ces guides (14, 15), les premiers sont disposés dans la partie supérieure, fixés à la console (3) du coulisseau (4) et les deuxièmes sont disposés dans la partie inférieure, fixés au coulisseau (4) ; et, pour chaque guide linéaire supérieur (14), il existe des patins (14.1) fixés au coulisseau (4) tandis que, pour chaque guide linéaire inférieur (15), il y a un patin (15.1) fixé à la console (3), de sorte que, dans la partie supérieure, ce sont les patins (14.1) qui se déplacent et que, dans la partie inférieure, ce sont les guides (15), ce qui améliore la rigidité du coulisseau (4) dans sa position arrière.

6. Fraiseuse à grande vitesse selon les revendications 1 et 3, **caractérisée en ce que** les diagonales théoriques (D1,D2) de jonction des guides linéaires (12) prévus pour les mouvements du coulisseau (4) selon l'axe Y se coupent en un point (P) où se coupent aussi les lignes de jonction de cylindres télescopiques (16) de compensation du poids et celles des deux moteurs linéaires (10 et 11) qui réalisent le mouvement selon l'axe Y du coulisseau (4) ; ce point (P) coïncide avec le centre de gravité de l'ensemble selon les axes Y et Z de la fraiseuse.

## Patentansprüche

1. Hochgeschwindigkeitsfräsmaschine nach Art derjenigen, deren Ständer (1) entlang einer Werkbank (2) längs einer horizontalen Achse X beweglich ist, wobei der Ständer (1) aus zwei Hälften (1.1,1.2) gebildet ist, die sich ausgehend von Ihrem Oberteil zur Basis hin vergrößern und hierbei eine breite Basis bilden, in der jede Hälfte (1.1,1.2) die Primarteile (9.1) von synchronen Linearmotoren (9) µmfasst, deren Sekundärteile (9.2) in Langsrichtung auf der Werkbank (2) fluchtend angeordnet sind,
**dadurch gekennzeichnet, dass** die Werkbank (2) drei geradlinige Führungen (6,7,8) aufweist, die mit Kufen (6.1,7.1,8.1), die in der Basis der Hälften (1.1, 1.2) des Ständers (1) angeordnet sind, das Verschleben des Ständers (1) mit hoher Geschwindigkeit entlang der Achse X bei Betätigung des Linearmotors (9) ermöglichen, ohne dass eine obere Führung des Ständers erforderlich ist.

2. Hochgeschwindigkeitsfräse nach dem vorhergehenden Anspruch,
**dadurch gekennzeichnet, dass** die zwei Hälften (1.1,1.2) des Ständers (1) mittels wenigstens einer Versteifungsbrücke (5) miteinander verbunden sind, die vorzugswelse im unteren Teil derart angeordnet ist, dass eine beliebige der beiden Hälften (1.1,1.2) aus der Brücke (5) gelöst und entfernt werden kann, wobei der Schlitten (4) und sein Träger (3) an der anderen Hälfte (1.1,1.2) eingehängt bleiben, um Montage- und Wartungsarbeiten vornehmen zu können.

3. Hochgeschwindigkeitsfräse nach Anspruch 1,
**dadurch gekennzeichnet, dass** von den drei allgemeinen Führungen (6, 7, 8) zur Verschiebung entlang der Achse X die beiden, ersten mit geradlinigen Führungen (12) zum Bewegen des Schlittens (4) entlang einer vertikalen Achse Y parallele Längsebenen bilden, von denen eine die Führung (6) und die vorderen Führungen (12) und die andere die Führung (7) und die hinteren Führungen (12) umfasst, wodurch die Steifigkeit der Fräsmaschine verbessert wird, während die dritte Führung (8) die Torsionsbeanspruchungen verringert

4. Hochgeschwindigkeitsfräse nach Anspruch 1 und 2,
**dadurch gekennzeichnet, dass** zwischen den beiden Hälften (1.1,1.2) des Ständers (1) ein Zwischenraum gebildet ist, der bis zu der Stelle, an der die untere Versteifungsbrücke (5) erreicht Wird, vollständig offen ist, so dass der Schlitten (4) entlang der Achse Y eine untere Position erreichen kann, in der das Höhenmaß der Achse des Schlittens (4) bezüglich des Bodens verringert ist, wobei dieses Maß höchstens 900 mm beträgt.

5. Hochgeschwindigkeitsfräse nach Anspruch 1,
**dadurch gekennzeichnet, dass** zum Betätigen des Schlittens (4) entlang einer horizontalen Achse Z, im rechten Winkel zur Achse X₁ ein Linearmotor (13) vorhanden ist, dessen Sekundärteil (13.2) sich über den gesamten Weg des Schlittens (4) erstreckt, der diesen somit bedeckt und während der Arbeitsphase schützt; diese Bewegung entlang der Achse Z des Schlittens (4) durch ein Paar geradliniger Führungen (14,15) geführt ist, die auf jeder Seite desselben angeordnet sind; bei diesen Führungen (14,15) die ersten im oberen Teil angeordnet und am Träger (3) des Schlittens (4) befestigt sind, und die zweiten im unteren Teil angeordnet und am Schlitten (4) befestigt sind; und für jede obere geradlinige Führung (14) Kufen (14.1) vorhanden sind, die am Schlitten (4) befestigt sind, während es für Jede untere geradlinige Führung (15) eine am Träger (3) befestigte Kufe (15.1) gibt, so dass sich im oberen Teil die Kufen (14.1) bewegen und im unteren Teil die Führungen (15), wodurch die Steifigkeit des Schlittens (4) in seiner hinteren Position verbessert wird.

6. Hochgeschwindigkeltsfräse nach Anspruch 1 und 3,
**dadurch gekennzeichnet, dass** sich die theoretischen Verbindungsdiagonalen (D1 D2) der geradlinigen Führungen (12), die für die Bewegungen des Schlittens (4) entlang der Achse Y vorgesehen sind, in einem Punkt (P) schneiden, in dems sich auch die Verbindungslinien von Teleskopzylindern (16) zur Gewichtskompensation mit denen der beiden Linearmotoren (10,11) schneiden, die die Bewegung entlang der Achse Y des Schlittens (4) ausführen, wobei dieser Punkt (P) mit dem Schwerpunkt des Aufbaus entlang der Achsen Y und Z der Fräsmaschine zusammenfällt.

## Claims

1. High-speed milling machine of the type in which the column (1) is mobile along a bed (2) in a horizontal axis X, the column (1) being constituted by two halves (1.1, 1.2) which, starting from their upper part, widen towards the base, forming a wide base in which each half (1.1, 1.2) comprises the primaries (9.1) of synchronous linear motors (9), the secondaries (9.2) of which are aligned longitudinally over the bad (2); **characterised in that** this bed (2) comprises three linear guides (8, 7, 8) which, together with shoes (6.1, 7.1, 8.1) arranged in the base of the halves (1.1 and 1.2) of the column (1), make it possible, when the linear motors (9) are actuated, for the column (1) to be displaced lit high speed along the axis X without requiring an upper guide for this column.

2. High-speed milling machine according to the preceding claim, **characterised in that** the two halves (1.1, 1.2) of the column (1) are joined together by means of at least one stiffening bridge (5) preferably arranged in the lower part, so that any one of the two halves (1.1, 1.2) can be detached from the bridge (5) and removed, while leaving the slide (4) and its brace (3) suspended from the other half (1.1 or 1.2) in order to cany out the assembly and maintenance operations.

3. High-speed milling machine according to Claim 1, **characterised in that**, among the three general guides (6, 7, 8) for displacements along the axis X, the first two, together with linear guides (12) for the movement of the slide (4) along a vertical axis Y , from longitudinal and parallel planes, one of which comprises the guide (6) and the front guides (12), and the other of which comprises the guide (7) and the rear guides (12), which improves the rigidity of the milling machine, while the third guide (8) reduces torsion effects.

4. High-speed milling machine according to Claims 1 and 2, **characterised in that**, between the two halves (1.1, 1.2) of the column (1), a space is defined that is entirely open as far as the point where the lower stiffening bridge (5) is reached so that, along the axis Y, the slide (4) can reach a low position in which the dimension of the height of the axis of the slide (4) above the ground is small, this dimension being 900 mm at most.

5. High-speed milling machine according to Claim 1, **characterised in that**, for actuating the slide (4) along an horizontal axis Z perpendicular to the axis X, there exists a linear motor (13), the secondary (13.2) of which extends over the whole course of the slide (4), which thus covers it and protects it during the work phase; this movement along the axis Z of the slide (4) is guided by a pair of linear guides (14 and 15) located in each side of said slide (4); among these guides (14, 15), the first are arranged in the upper part, fixed to the brace (3) of the slide (4), and the second are arranged in the lower part, fixed to the slide (4); and, for each upper linear guide (14), there exist shoes (14.1) fixed to the slide (4) while, for each lower linear guide (15), there is a shoe (15.1) fixed to the brace (3), so that, in the upper part, it is the shoes (14.1) that are displaced and, in the lower part, it is the guides (15) that are displaced, which improves the rigidity of the slide (4) in its rear position.

6. High-speed milling machine according to Claims 1 and 3, **characterised in that** the theoretical diagonals (D1,D2) for the junction of the linear guides (12) provided for the movements of the slide (4) along the axis Y, intersect at a point (P) where there is also an intersection of the lines of junction of the telescopic cylinders (16) for compensating for weight and those of the two linear motors (10 and 11), which produce the movement of the slide (4) along the axis Y ; this point (P) coincides with the centre of gravity of the whole along the axis Y and Z of the milling machine.
